# EUROPEAN PATENT SPECIFICATION

(11) **EP 1 484 377 B1**
(45) Date of publication and mention of the grant of the patent: **14.11.2012**
(21) Application number: 03710292.8
(22) Date of filing: 10.03.2003
(51) Int. Cl.: C09J 7/02, G11B 7/26

(54) **PHOTO-CURABLE ADHESIVE SHEET, PHOTO-CURABLE TRANSFER SHEET, OPTICAL INFORMATION RECORDING MEDIUM AND METHOD FOR PREPARING OPTICAL INFORMATION RECORDING MEDIUM**
PHOTOHÄRTBARE KLEBFOLIE, PHOTOHÄRTBARE TRANSFERFOLIE, OPTISCHER AUFZEICHNUNGSTRÄGER UND VERFAHREN ZUR HERSTELLUNG EINES OPTISCHEN AUFZEICHNUNGSTRÄGERS
FEUILLE ADHESIVE PHOTODURCISSABLE, FEUILLE DE TRANSFERT PHOTOCURCISSABLE, ET SUPPORT D'ENREGISTREMENT D'INFORMATIONS OPTIQUES ET SON PROCEDE DE PREPARATION

(30) Priority: 13.03.2002 JP 2002068552; 14.03.2002 JP 2002070540; 22.03.2002 JP 2002081616
(43) Date of publication of application: 08.12.2004
(73) Proprietor: Bridgestone Corporation, Tokyo 104-0031 (JP)
(72) Inventor: KITANO, Hideki, Bridgestone Corporation, Kodaira-shi, Tokyo 187-8531 (JP); KOTSUBO, Hidefumi, Bridgestone Corporation, Kodaira-shi, Tokyo 187-8531 (JP); INAMIYA, Takato, Bridgestone Corporation, Kodaira-shi, Tokyo 187-8531 (JP)
(74) Representative: Staudt, Hans-Peter
(86) International application number: PCT/JP2003/002786
(87) International publication number: WO 2003/076541

(56) References cited:
- JP-A- 9 169 956
- JP-A- 2000 207 777
- JP-A- 2000 207 779
- JP-A- 2002 025 116
- JP-A- 2002 241 711

## Description

### Background of Invention

### 1. Field of the invention

The present invention relates to an optical information recording medium, such as DVD (Digital Versatile Disc), CD (Compact Disc), an optical magnetic disc or a hard disc, in which a large amount of information such as letters, sound and animation is recorded and/or recordable as digital signals, and a process for the preparation thereof, and further a photo-curable adhesive sheet in the preparation of the medium.

### 2. Description of the Related Art

As an optical information recording medium in which digital signals have been already recorded by forming pits on its surface, CD and CD-ROM are widely used. Recently, DVD that animation can be also recorded by forming pits on its both (double) sides has been noted as the next generation recording medium instead of CD and increasingly used. Further, attention is directed to recordable discs such as CD-R, DVD-R and DVD-RW having groove(s) or grooves and pits thereon. Furthermore, an optical magnetic disc and a hard disc are also well known as the recordable disc.

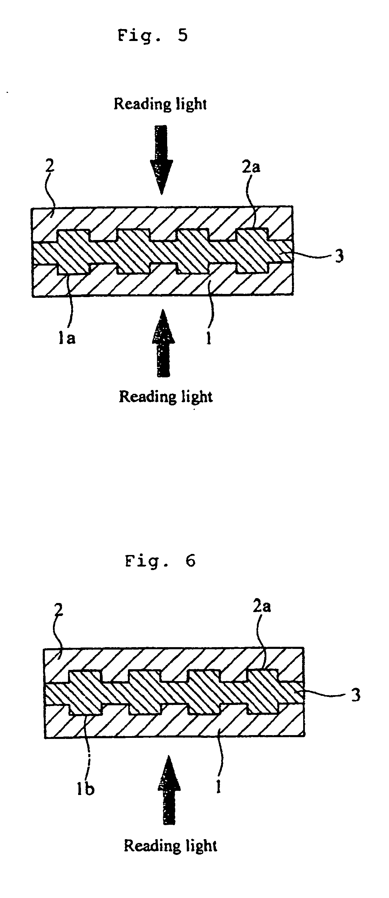

Conventional DVD having recording layers on its both sides includes a disc readable from double sides, as shown in, for example, Fig. 5, in which each of reflective layers 1a, 2a is formed on a surface of signal-pits of each of transparent resin substrates 1, 2 having the surface of signal-pits on its one side, and the two transparent resin substrates 1, 2 are bonded to each other through an adhesive layer 3 such that the reflective layers 1a, 2a face each other; and a disc readable from single side, as shown in, for example, Fig. 6, in which a semi transparent reflective layers 1b is formed on a surface of signal-pits of one transparent resin substrate 1 while a reflective layers 2a is formed on a surface of signal-pits of another transparent resin substrate 2 and the two transparent resin substrates 1, 2 are bonded to each other through an adhesive layer 3 such that the semitransparent reflective layers 1b and the reflective layer 2a face each other.

The DVD readable from double sides can be prepared, for example, by subjecting melted polycarbonate resin to injection molding by the use of a stamper having unevenness (concave and convex) corresponding to the reverse of unevenness of the signal-pit to be recorded on the substrate to prepare a transparent resin substrate having unevenness on its surface, forming a reflective layer on the uneven surface by spattering metal such as aluminum on it, and bonding two transparent resin substrates obtained in the above manner to each other through an adhesive such that the two reflective layers face each other. The adhesive usually uses an ultraviolet (UV) curable resin in the form of liquid.

The preparation of the optical information recording medium such as DVD usually requires an adhesive step for bonding two transparent resin substrates as mentioned above. Since the optical information recording medium is recorded and read out by light, a substrate of the medium is needed to have a uniform thickness and high transparency, and be free from deformation such as warpage. When the liquid UV curable resin is used as an adhesive, the resultant adhesive layer has high transparency but is apt to have warpage due to large shrinkage on curing, which possibly results on reduction of dimensional stability.

JA11 -273147 describes that a pressure-sensitive adhesive sheet or a dry photopolymer in addition to the liquid UV curable resin is used for bonding a transparent film to an injection molded substrate having an uneven surface. However, the publication describes that the dryphotopolymer is not preferred due to its low transparency.

With increase of information to be recorded, a new optical information recording medium, which has lager storage capacity than DVD now on use, is proposed. To obtain the large storage capacity, it is required to not only reduce sizes of signal pits and a groove but also shorten a wavelength of recording or reading laser. Further the shortening of the wavelength reduces distance between the laser and a surface having the pits and therefore it is needed to reduce a thickness of the optical recording substrate. Hence, it is also preferred to reduce a thickness of the adhesive layer.

For example, a standardized specification of a next generation optical disc "Blue-Ray Disc" was proposed on February 10, 2002. The specification mainly includes storage capacity of 23.3/25/27GB, laser wavelength of 405nm (violaceous laser), lens numerical aperture (N/A) of 0.85, disc diameter of 120mm, disc thickness of 1.2mm and track pitch of 0.32µm.

In the Blue-Ray Disc, as mentioned above, the sizes of groove and pits are reduced, and therefore it is required to reduce a spot size of a reading laser. The reduction of the spot size results in that the reading is apt to be influenced by inclination of the disc, and hence even DVD having a little warpage cannot be reproduced (read out). In order to avoid the disadvantage, it may be effective to reduce a thickness of a substrate and make a thickness of a cover layer provided on pits surface on a laser-irradiation side to approx. 0.1mm.

"NIKKEI ELECTRONICS, November" 5, 2001, pp.68 describes a process for the preparation of DVD suited to the above-mentioned requirements. The procerss is explained by referring to Fig. 14. A UV curable resin 5A is provided, by application, on a reflective layer (or recording layer) 6a of a disc substrate (1.1mm) 4a having the reflective layer on its uneven surface, while a UV curable resin 5B is provided, by application, on a stamper 4b made of polycarbonate having uneven surface. Subsequently, after the substrate is turnedover, the turned-over substrate and the stamper are put together, and the UV curable resins 5A, 5B are cured by irradiating ultraviolet beam from the stamper side. The stamper 4b is then removed from the cured UV curable resin 5B, a reflective layer (or recording layer) 6b is formed on the uneven surface and further a cover layer (thickness of approx. 0.1mm) 7 is provided the reflective layer 6b.

### Summary of the Invention

To achieve a new optical information recording medium having lager storage capacity than DVD now on use, the present inventors have made an enthusiastic study. A first aspect according to the present invention is made in view of the disadvantage of the above-mentioned adhesive, and hence the object of the first invention is to provide a photo curable adhesive sheet that can be advantageously used in the preparation of an optical information recording medium.

Further, the object of the first aspect is to provide a photo curable adhesive sheet that can be advantageously used in the preparation of an optical information recording medium having good dimensional stability and high transparency.

Furthermore, the object of the first aspect is to provide a process for the preparation of an optical information recording medium by using the photo curable adhesive sheet.

In the present invention, it is common to realize a new optical information recording medium having lager storage capacity than DVD is common, and particularly common is the use of a specific photo-curable composition comprising a reactive polymer having a photopolymerizable functional group.

The invention is attained by a photo-curable adhesive sheet comprising a photo-curable composition which comprises a reactive polymer having a photopolymerizable functional group and weight-average molecular weight of not less than 5, 000 and which has a glass transition temperature of not more than 20°C, the photo-curable adhesive sheet having a light transmittance of not less than 70% in a wavelength range of 380 to 420 nm.

In the photo-curable adhesive sheet, the reactive polymer preferably has a glass transition temperature of not more than 20°C, which renders the formation of unevenness by depression at room temperature easy. The photo-curable adhesive sheet preferably has a light transmittance of not less than 80% in a wavelength rang of 380 to 420nm. Further, the adhesive sheet preferably has a light transmittance of not less than 70% in a wavelength rang of 380 to 600nm, especially in a wavelength rang of 380 to 800nm. It is ensured that an optical disc (optical information recording medium) obtained by using the adhesive sheet having the light transmittance is read out without error if the disc is done by irradiation of laser. Moreover, the photo-curable adhesive sheet generally has cure shrinkage of not more than 8%.

Further, it is preferred that the reactive polymer is an acrylic resin. Further the reactive polymer preferably has 1 to 50% by mole of the photopolymerizable functional group. The photopolymerizable functional group generally is a (meth)acryloyl group. The preferred reactive polymer is an acrylic resin having the photopolymerizable functional group through a urethane bond. The photo-curable composition generally contains 0.1 to 10% by weight of a photopolymerization initiator. The photo-curable adhesive sheet preferably has a thickness of 5 to 300µm. It is preferred that a release sheet is provided on at least (especially both sides) one side of the photo-curable adhesive sheet.

The invention is also provided by a process for the preparation of an optical information recording medium comprising:
superposing two optical information recording substrates having an uneven surface of recorded pits and/or grooves on each other through the photo-curable adhesive sheet as defined in any of claims 1 to 9 such that the two uneven surfaces face each other,
depressing the substrates and sheet to form a laminate, and
curing the laminate by light.

In the process, the depressing step is preferably carried out under reduced pressure, and the depressing step is also preferably carried out at room temperature.

### Brief Description of the Drawings

Fig. 1 is a section view showing an example of an embodiment of a photo-curable adhesive sheet according to a first aspect of the present invention.
Fig. 2 is a section view showing an example of a process for the preparation of the optical information recording medium according to the first aspect.
Fig. 3 is a section view showing another example of a process for the preparation of the optical information recording medium according to the first aspect.
Fig. 4 is a schematic view for explaining a depressing method using a device according toa double vacuum chamber system.
Fig. 5 is a section view showing an example of a conventional optical information recording medium.
Fig. 6 is a section view showing another example of a conventional optical information recording medium.

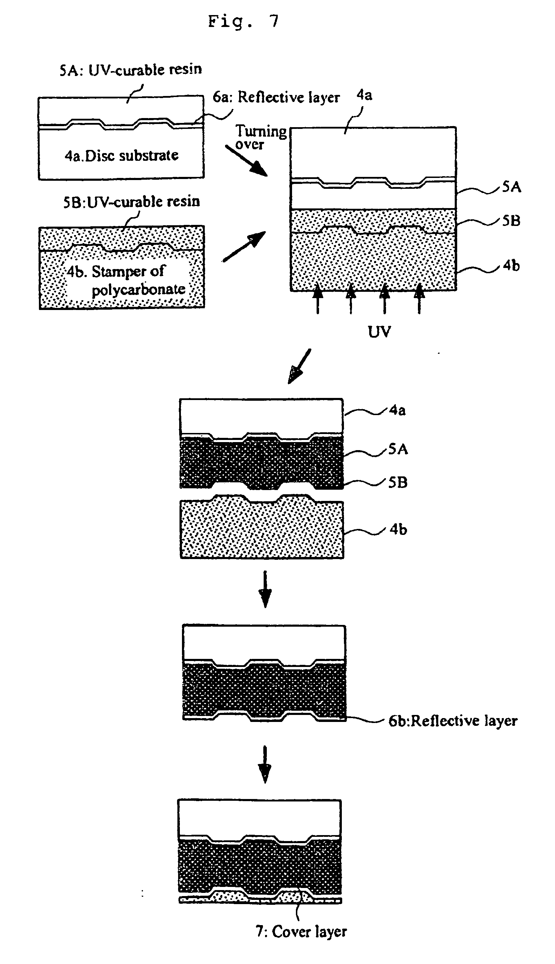

Fig. 7 is a section view showing a procedure for preparing a conventional optical information recording medium described in NIKKEI ELECTRONICS.

### Detailed Description of the Invention

Embodiments of the invention are explained in detail by referring to drawings.

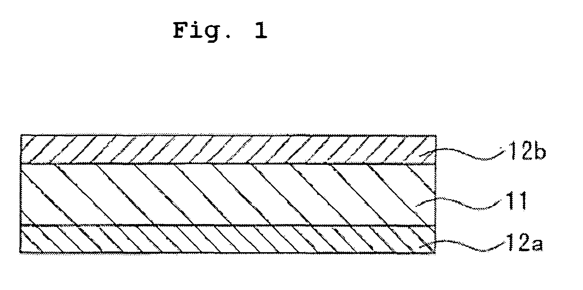

Fig. 1 is a section view showing an example of an embodiment of the photo-curable adhesive sheet 11 according to the present invention. In Fig. 1, the photo-curable adhesive sheet 11 has release sheets 12a, 12b on its both sides. The release sheet may be provided only on one side of the photo-curable adhesive sheet, and otherwise may not be provided, depending on uses of the resultant optical disc. The provision on the both sides is advantageous because it facilitates the handling of the adhesive sheet.

The photo-curable adhesive sheet 11 is a layer that is capable of deforming precisely along an uneven surface of, for example, an optical information substrate when thephoto-curable adhesive sheet 11 is depressed on the uneven surface, and is mainly composed of a photo-curable composition which comprises a reactive polymer having a photopolymerizable functional group and weight-average molecular weight of not less than 5,000 and which has a glass transition temperature of not more than 20°C. Further, the photo-curable adhesive sheet 11 has a light transmittance of not less than 70% in a wavelength range of 380 to 420 nm such that information can be easily read out by a reading (reproduction) laser. The light transmittance is preferably not less than 80% in a wavelength range of 380 to 420 nm. Hence, an optical disc obtained by using the adhesive sheet can be advantageously used in a process for reproducing pit signals by using a reproduction laser having a laser wavelength in the range of 380 to 420 nm.

The photo-curable adhesive sheet of the invention has flexibility such that contact bonding can be carried out at room temperature as described above. Hence, the photo-curable adhesive sheet has excellent handling, and therefore can be widely used in not only information recording media such as CD, DVD, CD-R, DVD-R and DVD-RW but also the other various uses. The photo-curable adhesive sheet can be particularly advantageously used in uses requiring precise bonding, such as the preparation of an electrical appliance, a furniture, an automobile, an instrument, a sports equipment or packing materials.

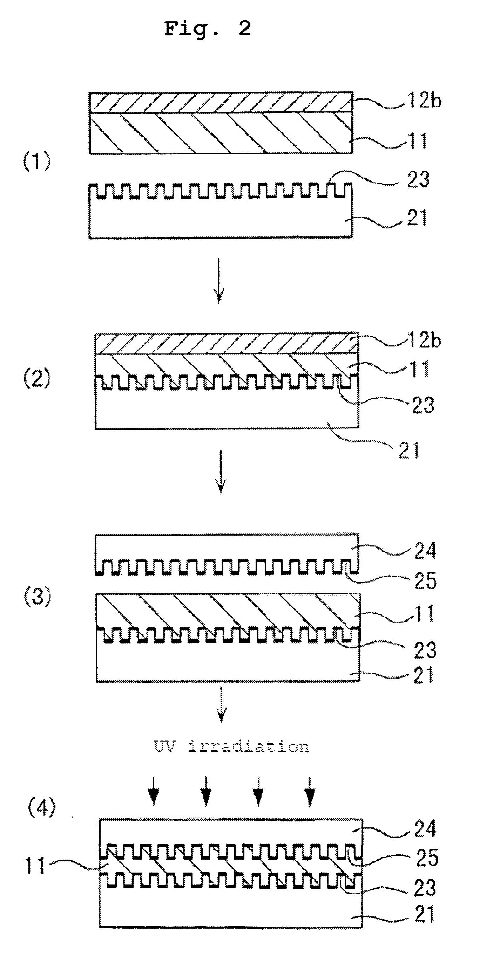

The optical information recording medium can be prepared using the above photo-curable adhesive sheet, for example, as shown in Fig. 2.

The release sheet 12a is removed from the photo-curable adhesive sheet 11 having release sheets 12a, 12b. The photo-curable adhesive sheet 11 having release sheet 12b is placed on an optical information recording substrate 21 having an uneven surface as recording pits and a reflective layer 23 (generally reflective layer of A1, Ag or the like having high reflectivity) provided on the uneven surface such that a side having no release sheet of the photo-curable adhesive sheet 11 faces the reflective layer, and they are depressed. Thus, the side of the photo-curable adhesive sheet 11 closely adheres to the uneven surface of the reflective layer to form a laminate (consisting of 12b, 11, 23 and 21). The release sheet 12b is removed from the laminate.

Subsequently, another optical information recording substrate 24 having an uneven surface as recording pits and a reflective layer 25 (or semitransparent reflective layer) provided on the uneven surface is placed on an uncured surface (having no substrate), where the release sheet 12b is removed, of the photo-curable adhesive sheet 11, such that the reflective layer 25 faces the uncured surface of optical information recording substrate 24, and they are depressed. Thus, the surface of the photo-curable adhesive sheet 11 closely adheres to the uneven surface of the reflective layer of the substrate to form a laminate (consisting of 21, 23, 11, 24 and 25). The photo-curable adhesive sheet 11of the laminate is cured by irradiation of ultraviolet rays. Thus the optical information recording medium is obtained.

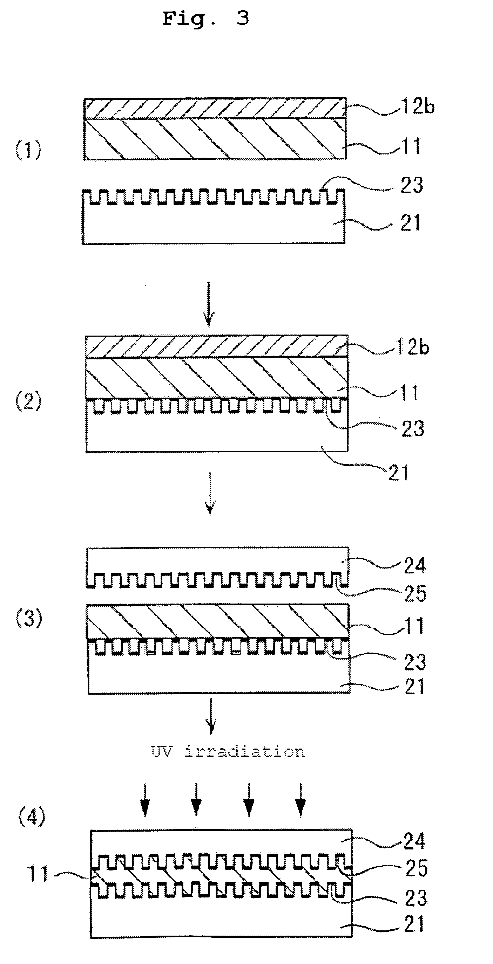

Otherwise, as shown in Fig. 3, a photo-curable adhesive sheet 11 having only a release sheet 12b is placed on an optical information recording substrate 24 having an uneven surface as recording pits and a reflective layer 23 provided on the uneven surface such that a side having no release sheet of the photo-curable adhesive sheet 11 faces the reflective layer. They are not depressed, and the release sheet 12b is removed from the adhesive sheet. Subsequently, another optical information recording substrate 24 is placed on a surface having no substrate of the photo-curable adhesive sheet 11, such that the reflective layer 25 faces the surface of the substrate 24, and then they are depressed at a time. Thus, the surface of the photo-curable adhesive sheet 11 closely adheres to the two uneven surfaces of the reflective layers of the substrates to form a laminate. The photo-curable adhesive sheet 11 of the laminate may be cured by irradiation of ultraviolet rays.

In the above procedure, a polymer sheet for protection may be bonded onto the adhesive sheet instead of another optical information recording substrate 24. In this case, there is only one uneven surface in the laminate. Otherwise, a (photo-curable or adhesive) transfer sheet is placed on an optical information recording substrate having an uneven surface as recording pits and a reflective layer provided on the uneven surface such that the transfer sheet faces the reflective layer. Subsequently, a stamper is depressed on the transfer sheet to form an uneven surface on the transfer sheet (if necessary cured), whereby a substrate having two uneven surfaces is prepared, and then a polymer sheet for protection maybe bondedonto the exposed uneven surface through a photo-curable adhesive sheet of the invention.

In the above process, the optical information recording medium exclusively used for reproduct ion is explained. However, an optical information recording medium used for recording (writing) is also prepared in the same manner as the above process. In the recordable medium, for example, grooves or grooves and pits is provided insteadof the pits, and a metal recording layer is provided instead of the reflective or semitransparent reflective layer. When the recording layer is a dye-recording layer, a recording layer and reflective layer are generally provided. Besides these points, the recordable medium can be also prepared in the same manner as above.

The optical information recording substrate may be prepared by a conventional injection molding or by the process comprising depressing a stamper on the photo-curable adhesive sheet of the invention, the adhesive sheet or the like. Thus, the optical information recording substrate of the invention can be prepared so as to have a thickness of 300µm or less.

In the process, when the photo-curable adhesive sheet is depressed on the optical information recording substrate, or when the two optical information recording substrate are superposed on each other through thephoto-curable adhesive sheet such that the reflective layers face each other, it is preferred to carry out the depressing or superposing operation under reduced pressure.

The depressing operation under the reduced pressure can be performed by a method comprising passing a substrate and photo-curable adhesive sheet or a substrate, photo-curable adhesive sheet and substrate, between two rolls under reduced pressure; or by a method comprising placing a substrate in a mold of a vacuum molding device and bring a photo-curable adhesive sheet into contact with the substrate under reduced pressure; or by a method comprising placing a substrate in a mold of a vacuum molding device and bring a photo-curable adhesive sheet and substrate into contact with the substrate under reduced pressure.

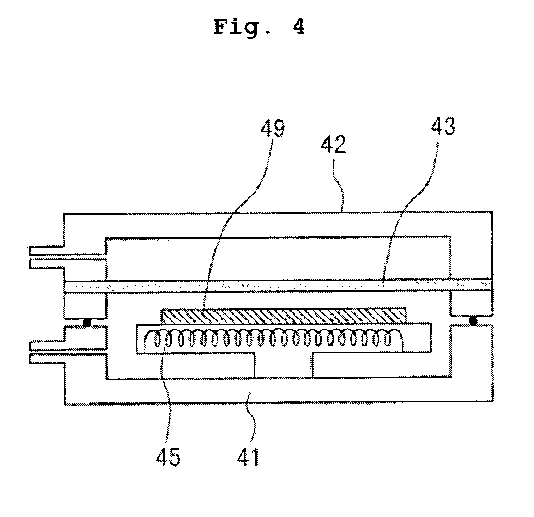

Further, the depressing operation under the reduced pressure can be performed using a device according to a double vacuum chamber system. The operation is explained by referring to Fig. 4. Fig. 4 shows a laminator according to a double vacuum chamber system. The laminator is provided with a lower chamber 41, an upper chamber 42, a sheet of silicone rubber 43 and a heater 45. A laminate 49 consisting of a substrate having unevenness and a photo-curable adhesive sheet provided thereon (or laminate of substrate/adhesive sheet/substrate) is placed in the lower chamber 41 of the laminator. Both the upper chamber 42 and lower chamber 41 are degassed or decompressed. The laminate 49 is heated with a heater 45, and air is introduced into the upper chamber 42 to allow the chamber to be at atmospheric pressure while the lower chamber 41 is kept under reduced pressure, whereby the laminate is depressed to be contact bonded. After cooling, the laminate is taken out and transformed to the next step. This operation permits sufficient deaeration under reduced pressure, and therefore, the substrate and the photo-curable adhesive sheet can be contact bonded without bubbles.

The photo-curable adhesive sheet according to the invention comprises a photo-curable composition which comprises a reactive polymer having a photopolymerizable functional group and weight-average molecular weight of not less than 5, 000 and which has a glass transition temperature of not more than 20°C.

The photo-curable composition is generally composed mainly of the reactive polymer having a photopolymerizable functional group, a compound (e.g., monomer or oligomer) having a photopolymerizable functional group (preferably (meth)acryloyl group), a photopolymerization initiator and if necessary other additives. These are described later.

The photo-curable composition of the invention is generally composed mainly of the reactive polymer having a photopolymerizable functional group, a compound (e.g., monomer or oligomer) having a photopolymerizable functional group (preferably (meth)acryloyl group), a photopolymerization initiator, and if necessary other additives.

Examples of the reactive polymer having a photopolymerizable functional group include homopolymers or copolymers (i.e., acrylic resins having a photopolymerizable functional group) derived from alkyl acrylate (e.g., methyl acrylate, ethyl acrylate, butyl acrylate, 2-ethylhexyl acrylate) and/or alkyl methacrylate (e.g., methyl methacrylate, ethyl methacrylate, butyl methacrylate, 2-ethylhexyl methacrylate) and having a photopolymerizable functional group on itsmainchainorsidechain. These (co)polymerscanbeobtained, for example, by copolymerizing one or more (meth)acrylate mentioned above with (meth)acrylate (e.g., 2-hydroxyethyl (meth)acrylate) having a functional group such as -OH and reacting the resultant polymer with a compound (e.g., isocyanatoalkyl (meth)acrylate) having a functional group capable of reacting with the functional group of the polymer and having a photopolymerizable functional group. Thus an acrylic resin having a photopolymerizable functional group through a urethane bond is preferred.

The reactive polymer of the invention has generally 1 to 50% by mole, preferably 5 to 30% by mole of the photopolymerizable functional group. Examples of the photopolymerizable functional grouppreferably include acryloyl, methacryloyl and vinyl groups, especially acryloyl and methacryloyl groups.

In case the reactive polymer having glass transition temperature of not more than 20°C is used as above, the resultant photo-curable sheet having flexibility can follow exactly the uneven surface of the stamper even at room temperature when the sheet is depressed on the stamper. The reactive polymer especially has glass transition temperature of 15 to -50°C because the resultant photo-curable layer can fol lowmore exactly the uneven surface. When the glass transition temperature exceeds the upper limit, high pressure and temperature is needed in the depressing and bonding steps of the sheet, which brings about lowering of workability. When the glass transition temperature falls to below the lower limit, the resultant cured sheet does not have sufficient hardness.

The reactive polymer of the invention generally has number-average molecular weight of 5,000 to 1,000,000, preferably 10,000 to 300,000, and/or generally has weight-average molecular weight of 5,000 to 1,000,000, preferably 10,000 to 300,000.

Examples of the compounds having a photopolymerizable group include (meth)acrylate monomers such as 2-hydroxyethyl (meth)acrylate, 2-hydroxyropyl (meth)acrylate, 4-hydroxybutyl (meth)acrylate, 2-ethylhexylpolyethoxy (meth)acrylate, benzyl (meth)acrylate, isobornyl (meth)acrylate, phenyloxyethyl (meth)acrylate, tricyclodecane mono(meth)acrylate, dicyclopentenyloxyethyl (meth)acrylate, tetrahydrofurfuryl (meth)acrylate, acryloylmorpholine, N-vinylcaprolactam, 2-hydroxy-3-phenyloxypropyl (meth)acrylate, o-phenylphenyloxyethyl (meth)acrylate, neopentylglycol di (meth)acrylate, neopentyl glycol dipropoxydi (meth)acrylate, neopentyl glycol hydroxypivalate di(meth)acrylate, tricyclodecanedimethylol di(meth)acrylate, 1,6-hexanediol di(meth)acrylate, nonanediol di(meth)acrylate, trimethylolpropane tri(meth)acrylate, pentaerythritol tri(meth)acrylate, pentaerythritol tetra(meth)acrylate, tris[(meth)acryloxyethyl]isocyanurate and ditrimethylolpropane tetra(meth)acrylate; and
the following (meth)acrylate oligomer such as:
polyurethane (meth)acrylate such as compounds obtained by reaction of:
   a polyol compound (e.g., polyol such as ethylene glycol, propylene glycol, neopentyl glycol, 1,6-hexanediol, 3-methyl-1,5-pentanediol, 1,9-nonanediol, 2-ethyl-2-butyl-1,3-propanediol, trimethylolpropane, diethylene glycol, dipropylene glycol, polypropylene glycol, 1,4-dimethylolcyclohexane, bisphenol-A polyethoxydiol and polytetramethylene glycol; polyesterpolyol obtained by reaction of the above-mentioned polyol and polybasic acid or anhydride thereof such as succinic acid, maleic acid, itaconic acid, adipic acid, hydrogenated dimer acid, phthalic acid, isophthalic acid and terephthalic acid; polycaprolactone polyol obtained by reaction of the above-mentioned polyol and ε-caprolactone; a compound obtained by reaction of the above-mentioned polyol and a reaction product of the above-mentioned polybasic acid or anhydride thereof and ε-caprolactone; polycarbonate polyol; or polymer polyol), and
   an organic polyisocyanate compound (e.g., tolylene diisocyanate, isophorone diisocyanate, xylylene diisocyanate, diphenylmethane-4,4'-diisocyanate, dicyclopentanyl diisocyanate, hexamethylene diisocyanate, 2,4,4'-trimethylhexamethylene diisocyanate, 2,2',4'-trimethylhexamethylene diisocyanate), and
   hydroxyl-containing (meth)acrylate (e.g., 2-hydroxyethyl (meth)acrylate, 2-hydroxyropyl (meth)acrylate, 4-hydroxybutyl (meth)acrylate, 2-hydroxy-3-phenyloxypropyl (meth)acrylate, cyclohexane-1,4-dimethylolmono(meth)acrylate, pentaerythritol tri(meth)acrylate or glycerol di(meth)acrylate);
   bisphenol-type epoxy(meth)acrylate obtained by reaction of bisphenol-A epoxy resin or bisphenol-F epoxy resin and (meth)acrylic acid.

These compounds having photopolymerizable functional group can be employed singly or in combination of two or more kinds.

Any photopolymerization initiators known can be used in the invention. The initiators having good storage-stability after mixing with other components are preferred. Examples of the photopolymerization initiators include acetophenone type initiators such as 2-hidroxy-2-methyl-1-phenylpropane-1-on, 1-hydroxycyclohexylphenylketone and 2-methyl-1-[4-(methylthio)phenyl]-2-morphorino-propane-1-on ; benzoin type initiators such as benzylmethylketal; benzophenone type initiators such as benzophenone, 4-phenylbenzophenone and hydroxybenzophenone; thioxanthone type initiators such as isopropylthioxanthone and 2,4-diethythioxanthone. Further, as special type, there can be mentioned methylphenylglyoxylate. Especiallypreferredare 2-hidroxy-2-methyl-1-phenylpropane-1-on, 1-hydroxycyclohexylphenylketone, 2-methyl-1-[4-(methylthio)phenyl]-2-morphorinopropane-1-on and benzophenone. These photopolymerization initiators can be employed together with one or more kinds of a photopolymerization promoter such as a benzoic acid type compound (e.g., 4-dimethylaminobezoic acid) or a tertiary amine compound by mixing the initiator with the promoter in optional ratio. Only the initiator can be employed singly or in combination of two or more kinds. The initiator is preferably contained in the photo-curable composition in the range of 0.1 to 20% by weight, particularly 1 to 10% by weight.

In addition to the above-mentioned photopolymerizable initiators, the acetophenone type initiator includes 4-phenoxydichloroacetophenone, 4-t-butyldichloroacetophenone, 4-t-butyltrichloroacetophenone, diethoxyacetophenone, 2-hidroxy-2-methyl-1-phenylpropane-1-on, 1-(4-isopropylphenyl)-2-hidroxy-2-methylpropane-1-on, 1-(4-dodecylphenyl)-2-hydroxy-2-methylpropane-1-on, 4-(2-hydroxyethoxy)-phenyl(2-hydroxy-2-propyl)ketone, 1-hydroxycyclohexylphenylketone, 2-methyl-1-[4-(methylthio)phenyl]-2-morphorino-propane-1-on ; and the benzophenone type initiators include benzophenone, benzoylbenzoic acid, methyl benzoylbenzoate, 4-phenylbenzophenone, hydroxybenzophenone, 4-benzoyl-4'-methylphenylsulfide and 3,3'-dimethyl-4-methoxybenzophenone.

The acetophenone type initiators preferably are 2-hidroxy-2-methyl-1-phenylpropane-1-on, 1-hydroxycyclohexylphenylketone, 2-methyl-1-[4-(methylthio)phenyl]-2-morphorinopropane-1-on, and the benzophenone type initiators preferably are benzophenone, benzoylbenzoic acid and methyl benzoylbenzoate.

Preferred examples of the tertiary amine compounds of the photopolymerization promoter include triethanolamine, methyldiethanolamine, triisopropanolamine, 4,4'-dimethylaminobenzophenone, 4,4'-diethylaminobenzophenone, ethyl 2-dimethylaminobenzonate, ethyl 4-dimethylaminobenzonate, (n-butoxy)ethyl 4-dimethylaminobenzonate, isoamyl 4-dimethylaminobenzonate and 2-ethylhexyl 4-dimethylaminobenzonate. Especially preferred are ethyl 4-dimethylaminobenzonate, (n-butoxy)ethyl 4-dimethylaminobenzonate, isoamyl 4-dimethylaminobenzonate and 2-ethylhexyl 4-dimethylaminobenzonate.

The photo-curable composition of the invention is preferably configured such that the photo-curable (adhesive or transfer) sheet has a glass transition temperature of not more than 20°C and the photo-curable (adhesive or transfer) sheet before and after curing has a transmittance of not less than 70%. Therefore the photo-curable composition preferably contains, in addition to the compound having a photopolymerizable functional group and the photopolymerization initiator, if desired the following thermoplastic resin and other additives.

The ratio by weight of the reactive polymer : the compound having a photopolymerizable functional group : the photopolymerization initiator generally is 40-100 : 0-60 : 0.1-10, preferably 60-100 : 0-40 : 1-10, especially 50-80 : 20-50 : 1-10.

As other additives, a silane coupling agent can be used for enhancing the adhesive strength. Examples of the silane coupling agent include vinyltriethoxysilane, vinyl-tris(β-methoxyethoxy)silane, Y-methacryloxypropylmethoxysilane, vinyltriacetoxysilane, Y-glycidoxypropyltrimethoxysilane, Y-glycidoxypropyltriethoxysilane, β-(3,4-epoxycyclohexyl)ethyltrimethoxysilane, Y-chloropropylmethoxysilane, vinyltrichlorosilane, Y-mercaptopropylmethoxysilane, Y-aminopropyltriethoxysilane, N-β-(aminoethyl)-Y-aminopropyltrimethoxysilane. The silane coupling agent can be used singly, or in combination of two or more kinds. The silane coupling agent is preferably used in the range of 0.01 to 5 weight by part based on 100 parts by weight of the above reactive polymer.

Similarly, an epoxy group-containing compound can be used for enhancing the adhesive strength. Examples of the epoxy group-containing compounds include triglycidyl tris(2-hydroxyethyl)isocyanurate, neopentylglycol diglycidyl ether, 1, 6-hexanediol diglycidyl ether, allyl glycidyl ether, 2-ethylhexyl glycidyl ether, phenyl glycidyl ether, phenol glycidyl ether, p-tert-butylphenyl glycidyl ether, diglycidyl adipate, diglycidyl o-phthalate, glycidyl methacrylate and butyl glycidyl ether. Further, the similar effect is also obtained by using an ol igomer having an epoxy group and molecular weight of hundreds to thousands, or a polymer having an epoxy group and molecular weight of thousands to hundreds of thousands. The content of the compound having an epoxy group is sufficient in the range of 0.1 to 20 parts by weight based on 100 parts by weight of the reactive polymer, particularly 1 to 10% by weight. At least one of the compounds having an epoxy group can be used singly or in combination of two or more kinds.

As other additives, further a hydrocarbon resin can be used for improving processing properties such as laminating properties. The hydrocarbon resin may be either natural resin or synthetic resin. Examples of the natural resins preferably include rosins, ros in derivatives and terpene resins. Examples of the rosins include gum resins, tall oil resins, wood resins. Examples of the rosin derivatives include hydrogenated rosins, disproportionated rosins, polymerized rosins, esterificated rosins, metal salts of rosins. Examples of the terpene resins include α-pinene resins, β-pinene resins, and terpene phenol resins. Moreover, as the natural resin, dammar, copal, shellac can be used. Examples of the synthetic resins preferably include petroleum resins, phenol resins, and xylene resins. Examples of the petroleum resins include aliphatic petroleum resins, aromatic petroleum resins, cycoaliphatic petroleum resins, copolymer type petroleum resins, hydrogenated petroleum resins, pure monomer type petroleum resins, and coumarone-indene resins. Examples of the phenol resins include alkylphenol resins and modified phenol resins. Examples of the xylene resins include xylene resins and modified xylene resins.

Furthermore, acrylic resin can be employed in the invention. For example, homopolymers and copolymers obtained from alkyl acrylate(s) such as methyl acrylate, ethyl acrylate and butyl acrylate and/or alkyl methacrylate(s) such as methyl methacrylate, ethyl methacrylate and butyl methacrylate can be used. Copolymers of these monomers and other copolymerizable monomers can be also used. In view of reactivity in the photo curing step and durability and transparency of cured product, polymethyl methacrylate (PMMA) is preferred.

The above-mentioned polymer such as hydrocarbon resin can be used in the amount of 1 to 20 parts by weight, preferably 5 to 15 parts by weight based on 100 parts by weight of the reactive polymer.

The photo-curable composition may contain, in addition to the above-mentioned additives, an ultraviolet absorber, an aging resistant agent, a dye, and a processing auxiliary agent in a small amount. If desired, particles of silica gel, calcium carbonate or silicone copolymer may be contained in a small amount.

The photo-curable adhesive or transfer sheet comprising the photo-curable composition of the invention is generally prepared by homogeneously mixing the reactive polymer, acompound having a photopolymerizable functional group (monomer and oligomer) and if desired other additives, kneading the mixture using an extruder or roll, and subjecting the kneaded mixture to a film-forming process using a calendar, roll, T-dieextrusion or inflation to form a film of a predetermined dimension. When a support is used, it is needed to form a film on the support. A more preferred process for forming the photo-curable sheet comprises the steps of: dissolving homogeneously the components in a good solvent, applying the resultant solution onto a separator coated closely with silicone or fluoric resin (or the support) by means of flow-coater method, roll-coater method, gravure-roll method, mayer-bar method or lip-die coating method, and vaporizing the solvent.

The surface of the photo-curable sheet may be embossed in the film formation process to prevent blocking and facilitate deaeration in the step depressing the sheet and the substrate or stamper. As methods for the embossing processing, conventional methods such as a method using embossing roll can be adopted. In a process for applying a solution, it is possible that the solution is applied onto an embossed film or paper having release properties whose emboss shape is transferred to the sheet. Mean surface roughness (Ra) of the embossed surface is generally not more than 50µm, preferably 0.01 to 50µm, especially 0.1 to 20µm, whereby air is easily escaped from an interface between the sheet and a device to permit the embossed surface of the sheet to fill up complicated unevenness of the device. The mean surface roughness of less than 0.01µm is apt to bring about poor deaeration, whereas the mean surface roughness of more than 50µm occasionally allows the unevenness of the sheet to remain in the depressing step.

The thickness of the photo-curable adhesive or transfer layer generally is in the range of 1 to 1,200µm, preferably 5 to 500µm, especially 5 to 300µm. When the thickness is thinner than 1µm, sealing properties are lowered and maybe the sheet does not full up the unevenness of the transparent substrate. When the thickness is thicker than 1,200µm, the thickness of the resultant recording medium is so thick whereby trouble in housing or storing of the medium and the resultant assembly or reverse influence in light transmittance possibly occurs.

The release sheet preferably comprises transparent organic resin having a glass transition temperature of not less than 50°C. The release sheet generally is a transparent resin sheet mainly consisting of organic resin such as polyester resin (e.g., polyethylene terephthalate, polycyclohexylene terephthalate, polyethylene naphthalate), polyamide (e.g., nylon 46, modified nylon 6T, nylon MxD6, polyphthalamide), ketone resin (e.g. , polyphenylene sulfide, polythioether sulfone), sulfone resin (e.g., polysulfone, polyether sulfone), polyethernitrile, polyarylate, polyether imide, polyamideimide, polycarbonate, polymethyl methacrylate, triacetylcellulose, polystyrene or polyvinyl chloride. Of these resins, polycarbonate, polymethyl methacrylate, polyvinyl chloride, polystyrene and polyethylene terephthalate can be preferably employed. The thickness is generally in the range of 10 to 200µm, especially in the range of 30 to 100µm.

The substrate having uneven surface used in the invention preferably comprises transparent organic resin having a glass transition temperature of not less than 50°C. The substrate generally is a transparent resin sheet mainly consisting of organic resin such as polyester resin (e.g., polyethylene terephthalate, polycyclohexylene terephthalate, polyethylene naphthalate), polyamide (e.g., nylon 46, modifiednylon6T, nylon MXD6, polyphthalamide), ketone resin (e.g., polyphenylene sulfide, polythioether sulfone), sulfone resin (e.g., polysulfone, polyether sulfone), polyether nitrile, polyarylate, polyether imide, polyamideimide, polycarbonate, polymethyl methacrylate, triacetylcellulose, polystyrene or polyvinylchloride. Of these resins, polycarbonate, polymethyl methacrylate, polyvinyl chloride, polystyrene and polyethylene terephthalate are excellent in transferring properties, transparency and birefringence, and therefore can be preferably employed. The thickness is generally in the range of 200 to 2,000µm, especially in the range of 50 to 1,500µm.

The polymer film for protection used in the invention preferably comprises transparent organic resin having a glass transitiontemperatureof not less than 50°C. The film generally is a transparent resin sheet mainly consisting of organic resin such as polyester resin (e.g., polyethylene terephthalate, polycyclohexylene terephthalate, polyethylene naphthalate), polyamide (e.g., nylon 46, modified nylon 6T, nylon MXD6, polyphthalamide), ketone resin (e.g., polyphenylene sulfide, polythioether sulfone), sulfone resin (e.g., polysulfone, polyether sulfone), polyether nitrile, polyarylate, polyether imide, polyamideimide, polycarbonate, polymethyl methacrylate, triacetylcellulose, polystyrene or polyvinyl chloride. Of these resins, polycarbonate, polymethyl methacrylate, polyvinyl chloride, polystyrene and polyethylene terephthalate are excellent in transparency and birefringence, and therefore can be preferably employed. The thickness is generally in the range of 10 to 200µm, especially in the range of 50 to 100µm.

The photo-curable adhesive sheet of the invention obtained as above generally comprises the photo-curable composition containing the reactive polymer of a glass transition temperature of not more than 20°C. Further, the photo-curable adhesive or transfer sheet (generally corresponding to optical information recording substrate) generally has a light transmittance of not less than 70% in a wavelength rang of 380 to 420nm, preferably 380 to 800nm. In more detail, by setting the glass transition temperature of the reactive polymer to not more than 20°C, the resultant photo-curable sheet having flexibility can follow exactly the uneven surface of the stamper even at room temperature when the sheet is depressed on the stamper. Especially, in the case of the glass transition temperature of 15 to -50°C, the properties following exactly the uneven surface of the stamper is Further improved. When the glass transition temperature is so high, high pressure and temperature is needed in the depressing or bonding operation whereby the workability is reduced. When the glass transition temperature is so low, the resultant sheet after curing does not have sufficient hardness.

As described above, the (cured) photo-curable adhesive sheet generally has a light transmittance of not less than 70% in a wavelength rang of 380 to 420nm, preferably 380 to 800nm, whereby reduction of the strength of signals to be read out with a laser beam can be prevented. Further, the sheet preferably has a light transmittance of not less than 80% in a wavelength rang of 380 to 420nm.

The reactive polymer of the photo-curable composition preferably has 1 to 50% by mole of polymerizable functional group, whereby the cured photo-curable sheet has strength capable of holding its shape. The photopolymerization initiator is preferably used in the amount of 0.1 to 10% by weight as described previously. The amount of less than the lower limit causes workability to reduce owing to slow curing rate, whereas the amount of more than the upper limit causes the properties following exactly the uneven or rough surface of the stamper to reduce.

The photo-curable adhesive sheet of the invention can be offered as a film precisely controlled in the thickness, and therefore it is possible to easily and precisely bond the sheet to the uneven surface such as the substrate or stamper. This bonding (contact bonding) can be easily carried out by depressing the sheet and stamper by means of easy method using pressure rollers or easy press to temporarily bond them at temperature of 20 to 100°C, and then curing the sheet by exposing it to light at room temperature for one to tens seconds. Further, the temporarily bonded laminate is free from occurrence of slippage or peeling between of the sheet and stamper or substrate owing to its specific adhesion, and hence the laminate can be freely handled until the light-curing step.

In case the photo-curable adhesive sheet of the invention is cured, it is possible to adopt, as light source used, various sources generating light in the wavelength range of ultraviolet to visible rays. Examples of the sources include super-high-pressure, high-pressure and low-pressure mercury lamps, a chemical lamp, a xenon lamp, a halogen lamp, a mercury halogen lamp, a carbon arc lamp, and an incandescent electric lamp, and laser beam. The exposing time is generally in the range of a few seconds to a few minutes, depending upon kinds of the lamp and strength of light. To promote the curing, the laminate may be heated beforehand for 30 to 80°C, and then the heated laminate may be exposed to ultraviolet rays.

The metal reflective layer of the invention is formed on an uneven surface of the resultant cured photo-curable sheet having the uneven surface by metallizing (e.g., spattering, vacuum deposition, ion-plating). Examples of the metal materials include aluminum, gold, silver or alloy thereof. The semitransparent reflective layer provided on the sheet is generally formed by using silver as metal. In more detail, the semitransparent reflective layer is required to have low reflectivity compared with the reflective layer, and therefore is formed by changing the materials and/or the thickness.

When the organic polymer film is bonded onto the reflective layer of the cured sheet, an adhesive is applied onto one of the film and the sheet, and the other is superposed on the adhesive layer, which is cured. When the adhesive is UV-curable resin, it is cured by UV irradiation, and when the adhesive is hot-melt type, it is applied to the reflective layer under heating and then cooled.

In the preparation of the optical information recording medium,it is continuously processed in the formof sheet and finally punched out in the form of disc However, it may be processed in the form of disc before the bonding.

### EXAMPLE

The invention is illustrated in detail using the following Examples.

### [Example 1]

### <Preparation of photo-curable adhesive sheet>

### (Preparation of reactive polymer)

### Formulation I

| | |
|---|---|
| 2-ethylhexyl methacrylate | 70 parts by weight |
| methyl methacrylate | 20 parts by weight |
| 2-hydroxyethyl methacrylate | 10 parts by weight |
| benzophenone | 5 parts by weight |
| toluene | 30 parts by weight |
| ethyl acetate | 30 parts by weight |

A mixture of the above Formulation I was heated to 60°C with moderately stirring to initiate the polymerization, and stirred at this temperature for 10 hours to provide acrylic resin having a hydroxyl group on its side chain. Then, 5 parts by weight of Calens MOI (2-isocyanatoethyl methacrylate; available from Showa Denko K.K.) was added to the solution of the acrylic resin, and reacted with each other at 50°C with moderately stirring to provide a solution 1 containing a reactive polymer having a photopolymerizable functional group.

The resultant reactive polymer has Tg of 0°C, weight-average molecular weight of 150,000 and 5% by mole of methacryloyl group on its side.

### Formulation II

| | |
|---|---|
| solution 1 of reactive polymer | 100 parts by weight |
| tricyclodecane diacrylate | 30 parts by weight |
| 1-hydroxycyclohexyl phenyl ketone | 1 part by weight |

The above Formulation II was homogeneously dissolved to give a mixture, which was applied onto a release sheet (thickness: 75µm; trade name: No. 23, available from Fujimori Kogyo) and dried to forma photo-curable adhesive sheet (layer) of thickness of 25±2µm. Thus, the resultant photo-curable adhesive sheet had the release sheet and therefore the total thickness was 100±2µm.

### <Preparation of one optical information recording substrate having reflective layer>

A photo-curable transfer sheet was prepared in the same manner as in the photo-curable adhesive sheet. The resultant photo-curable transfer sheet having release sheet had thickness of 100µm, which is thicker than the adhesive sheet.

The photo-curable transfer sheet was depressed on an unevenness surface of a stamper having the uneven surface as pits using a roller made of silicone rubber under load of 2kg to form a laminate in which the shape of the uneven surface was transferred to a surface of the photo-curable transfer sheet.

Subsequently, the photo-curable transfer sheet of the laminate was exposed to UV-rays of a metal-halide lamp under the condition of an integrated amount of light of 1,000mJ/cm² and as a result, the transferred layer (photo-curable sheet) was cured.

The stamper was peeled from the laminate. Silver alloy was spattered on the uneven surface of the cured photo-curable layer (optical information recording substrate) to form a semitransparent reflective layer of silver alloy. Thus, an optical information recording substrate having reflective layer was prepared.

### <Preparation of the other optical information recording substrate having reflective layer>

Melt carbonate was poured into a mold having an uneven surface as pits and solidified to form an optical information recording substrate having thickness of 1, 100µm. Aluminum was spattered on the uneven surface of the optical information recording substrate to form a reflective layer of A1. Thus, the other optical information recording substrate having reflective layer was prepared.

### <Preparation of optical information recording medium>

The two optical information recording substrates prepared above were bonded to each other through the photo-curable adhesive sheet prepared above such that the two reflective layers faced each other to give a laminate, and the laminate was exposed to UV-rays of a metal-halide lamp under the condition of an integrated amount of light of 1,000mJ/cm², and as a result, the photo-curable adhesive sheet was cured. Thus an optical information recording medium (DVD) was prepared.

### [Example 2]

### <Preparation of photo-curable adhesive sheet>

### (Preparation of reactive polymer)

### Formulation I'

| | |
|---|---|
| n-hexyl methacrylate | 50 parts by weight |
| 2-hydroxyethyl methacrylate | 50 parts by weight |
| benzophenone | 5 parts by weight |
| toluene | 30 parts by weight |
| ethyl acetate | 30 parts by weight |

A mixture of the above Formulation I' was heated to 60°C with moderately stirring to initiate the polymerization, and stirred at this temperature for 10 hours to provide acrylic resin having a hydroxyl group on its side chain. Then, 50 parts by weight of Calens MOI (2-isocyanatoethyl methacrylate; available from Showa Denko K.K.) was added to the solution of the acrylic resin, and reacted with each other at 50°C with moderately stirring to provide a solution 2 containing a reactive polymer having a photopolymerizable functional group.

The resultant reactive polymer has Tg of 5°C, weight-average molecular weight of 130,000 and 50% by mole of methacryloyl group on its side.

### Formulation II'

| | |
|---|---|
| solution 2 of reactive polymer | 100 parts by weight |
| 1,6-hexanediol dimethacrylate | 10 parts by weight |
| 1-hydroxycyclohexyl phenyl ketone | 1 part by weight |

The above Formulation II' was homogeneously dissolved to give a mixture, which was applied onto a release sheet (thickness: 75µm; trade name: No. 23, available from Fujimori Kogyo) and dried to form a photo-curable adhesive sheet of thickness of 25±2µm. Thus, the resultant photo-curable adhesive sheet had the release sheet and therefore the total thickness was 100±2µm.

### <Preparation of one and the other optical information recording substrates having reflective layer and optical information recording medium>

One and the other optical information recording substrates and optical information recording medium were prepared in the same manner as described in Example 1 except for using the above photo-curable adhesive sheet. Thus DVD was obtained.

### [Comparison Example 1]

An optical information recording medium was prepared in the same manner as described in Example 1 except for performing the preparation of one optical information recording substrate and the recording medium in the following manner:

### <Preparation of one optical information recording substrate having reflective layer>

Melt carbonate was poured into a mold having an uneven surface as pits and solidified to form an optical information recording substrate having thickness of 100±2µm. Silver alloy was spattered on the uneven surface of the optical information recording substrate to form a semitransparent reflective layer of silver alloy. Thus, one optical information recording substrate having reflective layer was prepared.

### <Preparation of optical information recording medium>

A liquid curable adhesive (SD-661; available from DAINIPPON INK AND CHEMICALS, INC.) which is commercially available was applied onto one of the two optical information recording substrates prepared above. The two optical information recording substrates were bonded to each other through the adhesive such that the two reflective layers faced each other to give a laminate, and the laminate was exposed to UV-rays whereby the adhesive sheet was cured. Thus an optical information recording medium (DVD) was prepared.

### <Evaluation of optical information recording substrate and medium>

### (1) Light transmittance (wavelength of 380 to 800 nm)

Light transmittance of the resultant photo-curable adhesive sheet is measured in the wavelength of 380 to 800 nm according to JIS K6717. Light transmittance of 70% or more is marked as o, and Light transmittance of less than 70% is marked as ×.

### (2) Light transmittance (wavelength of 380 to 420 nm)

Light transmittance of the resultant photo-curable adhesive sheet is measured in the wavelength of 380 to 420 nm according to JIS K6717. Light transmittance of 70% or more is marked as o, and Light transmittance of less than 70% is marked as ×.

### (3) Roughness of land portion

A land portion of an uneven surface on which pits were formed is evaluated on its smoothness using AFM (atomic force microscope). Land portion having sufficient smoothness is marked as o, and land portion having poor smoothness is marked as ×.

### (4) Readout of signals

The information of the resultant optical information recording medium is read out using a laser beam of wavelength of 405nm to obtain its wavy pattern. This wavy pattern is compared with that of the stamper. The wavy pattern of the medium coincident with that of the stamped is marked as o, and the wavy pattern of the medium little coincident with that of the stamper is marked as x.

The obtained results are shown in Table 1.

**Table 1**

| | Example 1 | Example 2 | Com. Example 1 |
|---|---|---|---|
| Light transmittance (380-800nm) | ○ | ○ | ○ |
| Light transmittance (380-420nm) | ○ | ○ | ○ |
| Roughness of land | ○ | ○ | × |
| Readout of signals | ○ | ○ | × |

As shown above, the photo-curable adhesive sheet according to the invention is depressed on an uneven shape of an optical information recording substrate to precisely follow the uneven surface and adhere to it. Thus the resultant optical information recording substrate has a signal surface (uneven surface) to which the adhesive layer (sheet) precisely adheres, and is free from adverse effect on the signal surface by the adhesion. Accordingly, the resultant optical information recording medium scarcely brings about occurrence of errors when the information (signals) is read out.

Further, in the adhesion procedure in the preparation of the optical information recording substrate of the invention, the photo-curable adhesive sheet used is softened and deformed and allowed to closely adhere to the uneven surface, and then cured. Therefore, optical information recording substrates can be bonded to each other by even a thin layer having a thickness of 300µm or less. Further, the photo-curable adhesive sheet of the invention has high transparency compared with conventional UV curable resin, and furthermore has excellent dimensional stability due to less cure shrinkage than a conventional UV-curable resin. Hence, the resultant optical information recording medium prepared using the adhesive sheet does not suffer from deformation such as warpage.

For example, the photo-curable adhesive sheet of the invention has a small thickness (e.g., 25±2µm, nonuniformity of ±2µm) as an adhesive layer, and therefore the adhesive sheet shows excellent precision in the thickness compared with that of an adhesive layer formed by spin-coat-application of a conventional UV curable resin liquid, the application bringing about thickness-nonuniformity of ±5µm. Such less thickness-nonuniformity can bring about enhancement of the dimensional stability.

Since the photo-curable adhesive sheet of the invention has the above excellent characteristics, it is apparent that the sheet is useful in not also the preparation of the resultant optical information recording medium but also the bonding operation in various fields.

### [Description of reference number]

- 11:: Photo-curable adhesive sheet
- 12a, 12b:: Release sheet
- 23:: Reflective layer
- 21, 24:: Optical information recording substrate
- 25:: Semitransparent reflective layer
- 1, 2:: Transparent resin substrate
- 1a, 2a:: Reflective layer
- 3:: Adhesive layer
- 1b:: Semitransparent layer

## Claims

1. A photo-curable adhesive sheet comprising a photo-curable composition which comprises a reactive polymer having a photopolymerizable functional group and weight-average molecular weight of not less than 5,000 and which has a glass transition temperature of not more than 20°C, the photo-curable adhesive sheet having a light transmittance of not less than 70% in a wavelength range of 380 to 420 nm.

2. The photo-curable adhesive sheet as defined in claim 1, wherein the reactive polymer has a glass transition temperature of not more than 20°C.

3. The photo-curable adhesive sheet as defined in claim 1 or 2, which has a light transmittance of not less than 80% in a wavelength rang of 380 to 420nm.

4. The photo-curable adhesive sheet as defined in any of claims 1 to 3, wherein the reactive polymer is an acrylic resin.

5. The photo-curable adhesive sheet as defined in any of claims 1 to 4, wherein the reactive polymer has 1 to 50% by mole of the photopolymerizable functional group.

6. The photo-curable adhesive sheet as defined in any of claims 1 to 5, wherein the photopolymerizable functional group is a (meth)acryloyl group.

7. The photo-curable adhesive sheet as defined in any of claims 1 to 6, wherein the photo-curable composition contains 0.1 to 10% by weight of a photopolymerization initiator.

8. The photo-curable adhesive sheet as defined in any of claims 1 to 7, which has a thickness of 5 to 300µm.

9. The photo-curable adhesive sheet as defined in any of claims 1 to 8, wherein a release sheet is provided on at least one side of the photo-curable adhesive sheet.

10. A process for the preparation of an optical information recording medium comprising:
superposing two optical information recording substrates having an uneven surface of recorded pits and/or grooves on each other through the photo-curable adhesive sheet as defined in any of claims 1 to 9 such that the two uneven surfaces face each other,
depressing the substrates and the adhesive sheet to form a laminate, and
curing the laminate by light.

11. The process as defined in claim 10, wherein the depressing step is carried out under reduced pressure.

12. The process as defined in claim 10 or 11, wherein the depressing step is carried out at room temperature.

## Patentansprüche

1. Lichtaushärtbarer Klebebogen, aufweisend eine lichthärtbare Zusammensetzung, die ein reaktives Polymer umfasst mit einer photopolymerisierbaren funktionellen Gruppe und einem gewichtsdurchschnittlichen Molekulargewicht von nicht weniger als 5000 und die eine Glasübergangstemperatur von nicht mehr als 20°C aufweist, wobei der lichtaushärtbare Klebebogen eine Lichtdurchlässigkeit von nicht weniger als 70% aufweist in einem Wellenlängenbereich von 380 bis 420 nm.

2. Lichtaushärtbarer Klebebogen nach Anspruch 1, wobei das reaktive Polymer eine Glasüberganstemperatur von nicht mehr als 20°C aufweist.

3. Lichtaushärtbarer Klebebogen nach Anspruch 1 oder 2, der eine Lichtdurchlässigkeit von nicht weniger als 80% aufweist in einem Wellenlängenbereich von 380 bis 420 nm.

4. Lichtaushärtbarer Klebebogen nach einem der Ansprüche 1 bis 3, wobei das reaktive Polymer ein Acrylharz ist.

5. Lichtaushärtbarer Klebebogen nach einem der Ansprüche 1 bis 4, wobei das reaktive Polymer 1 bis 50 mol-% der photopolymerisierbaren funktionellen Gruppe aufweist.

6. Lichtaushärtbarer Klebebogen nach einem der Ansprüche 1 bis 5, wobei die photopolymerisierbare funktionelle Gruppe eine (Meth)acryloylgruppe ist.

7. Lichtaushärtbarer Klebebogen nach einem der Ansprüche 1 bis 6, wobei die lichtaushärtbare Zusammensetzung 0,1 bis 10 Gewichts-% eines Photopolymerisationsinitiators enthält.

8. Lichtaushärtbarer Klebebogen nach einem der Ansprüche 1 bis 7, der eine Dicke von 5 bis 300µm aufweist.

9. Lichtaushärtbarer Klebebogen nach einem der Ansprüche 1 bis 8, wobei eine abziehbare Schutzfolie zumindest auf einer Seite des lichtaushärtbaren Klebebogens vorgesehen ist.

10. Verfahren zum Herstellen eines Mediums zum Aufzeichnen von optischer Information, umfassend:
Übereinanderlegen von zwei Substraten zum Aufzeichnen von optischer Information mit einer unebenen Oberfläche von aufgezeichneten Grübchen und/oder Rillen durch den in einem der Patentansprüche 1 bis 9 definierten lichtaushärtbaren Klebebogen, sodass die zwei unebenen Oberflächen einander zugewandt sind,
Absenken der Substrate und des Klebebogens, um ein Laminat zu bilden, und
Härten des Laminats durch Licht.

11. Verfahren nach Anspruch 10, wobei der Schritt des Absenkens unter reduziertem Druck ausgeführt wird.

12. Verfahren nach Anspruch 10 oder 11, wobei der Schritt des Absenkens bei Zimmertemperatur ausgeführt wird.

## Revendications

1. Feuille adhésive photodurcissable comprenant une composition photodurcissable comprenant un polymère réactif qui a un groupe fonctionnel photopolymérisable et un poids moléculaire moyen en poids qui n'est pas inférieur à 5000 et dont la température de transition vitreuse n'est pas supérieure à 20°C, la feuille adhésive photodurcissable ayant une transmission de lumière qui n'est pas inférieure à 70% dans une plage de longueur d'onde comprise entre 380 et 420 nm.

2. Feuille adhésive photodurcissable selon la revendication 1, dans laquelle le polymère réactif a une température de transition vitreuse qui n'est pas supérieure à 20°C.

3. Feuille adhésive photodurcissable selon la revendication 1 ou 2, laquelle a une transmission de lumière qui n'est pas inférieure à 80% dans une plage de longueur d'onde comprise entre 380 et 420 nm.

4. Feuille adhésive photodurcissable selon l'une des revendications 1 à 3, dans laquelle le polymère réactif est une résine acrylique.

5. Feuille adhésive photodurcissable selon l'une des revendications 1 à 4, dans laquelle le polymère réactif comporte de 1 à 50% en mole du groupe fonctionnel photopolymérisable.

6. Feuille adhésive photodurcissable selon l'une des revendications 1 à 5, dans laquelle le groupe fonctionnel photopolymérisable est un groupe (méth)acryloyle.

7. Feuille adhésive photodurcissable selon l'une des revendications 1 à 6, dans laquelle la composition photodurcissable contient de 0,1 à 10% en poids d'un initiateur de photopolymérisation.

8. Feuille adhésive photodurcissable selon l'une des revendications 1 à 7, laquelle a une épaisseur de 5 à 300 µm.

9. Feuille adhésive photodurcissable selon l'une des revendications 1 à 8, dans laquelle une feuille de retrait est prévue sur au moins un côté de la feuille adhésive photodurcissable.

10. Procédé pour préparer un support d'enregistrement d'informations optiques, comprenant:
- la superposition de deux substrats d'enregistrement d'informations optiques, à surface non plane comportant des creux et/ou des rainures enregistrés, au moyen de la feuille adhésive photodurcissable selon l'une des revendications 1 à 9, de sorte que les deux surfaces non planes se font face,
- le pressage des substrats et de la feuille adhésive pour former un stratifié et
- le durcissement du stratifié par la lumière.

11. Procédé selon la revendication 10, d'après lequel l'étape de pressage est réalisée sous pression réduite.

12. Procédé selon la revendication 10 ou 11, d'après lequel l'étape de pressage est réalisée à température ambiante.
